# EUROPEAN PATENT APPLICATION

(11) **EP 3 260 587 A1**
(43) Date of publication of application: **27.12.2017**
(21) Application number: 16175317.3
(22) Date of filing: 20.06.2016
(51) Int. Cl.: D04H 1/00, B32B 5/02, B32B 5/22, B32B 27/04, B32B 27/12, B29B 17/00, C08J 5/04, B27N 3/00, B29C 51/00, D04H 1/732

(54) **METHOD FOR MANUFACTURING RECYCLED PLASTIC COMPOSITE**

(71) Applicant: Eco-oh! bvba, 2430 Laakdal (BE)
(72) Inventor: Verhaert, Koen, 2430 Laakdal (BE); Galle, Rudy, 9570 Zingem (BE)
(74) Representative: BiiP cvba

(57) **Abstract**

A method for manufacturing a nonwoven recycled thermoplastic composite is disclosed, according to an illustrative embodiment of the present invention. The method includes collecting flakes of light weight thermoplastic materials. The method further includes forming a thermoplastic matrix by mixing the low weight thermoplastic flakes. The method further includes blending the thermoplastic matrix with a core of unraveled natural fiber to form a mixture thereof. Thereafter, the mixture is converted into a web-shaped structure using an air-laying process. The web shaped structure is heated to obtain a nonwoven thermoplastic composite of a desired thickness.

## Description

### Field of Invention

The present invention relates generally to methods for manufacturing a plastic composite. More particularly, the present invention relates to methods for manufacturing a plastic composite using nonwoven recycled thermoplastic material.

### Background of the Invention

Plastic has become the most widely used material throughout the industry to form a variety of products for domestic as well as commercial purposes. Accordingly, there has been a significant increase in plastic production through the years and this has significantly contributed to the increasing solid waste burden. The characteristics of plastics make them an especially troublesome part of rash because they do not decay quickly.

In order to reduce the costs associated with obtaining raw materials, wastage of natural resources for manufacture of disposable products and to minimize potentially negative effects on the environment, efforts have been constantly done for developing methods for recycling used thermoplastic materials, which would otherwise be burnt or placed in a landfill.

In one such application of recycled thermoplastic materials, a variety of thermoplastic composite sheets / boards have been developed. Such thermoplastic composites, generally prepared by nonwoven methods, include fiber materials reinforced within the recycled thermoplastic materials. These thermoplastic composites provide a number of advantages, e.g., they can be molded and formed into a variety of suitable products both structural and non-structural, including such as, among many others, parking plates, advertisement boards, automotive panels, and many others.

However, the use of recycled materials for preparing nonwoven thermoplastic composites has its own drawbacks. For example, the recycling of various light weight thermoplastic products, e.g., disposable gloves, aprons, air filters, protective covers, plastic covers, polythene, etc., is not generally preferred as their use often result in products that have physical properties which are generally less acceptable than products made from strong thermoplastic materials. Accordingly, these types of products remain "waste", and thus, continue to be sent to landfills or incinerated, and thus, have deleterious effects on the environment.

In some recent efforts, such shortcoming with the light weight thermoplastic material is resolved by using a method in which light weight plastic materials such as polypropylene (PP) or polyethylene terephthalate (PET) bags, films, rags, or the like are first washed in a centrifuge process and then melted and reprocessed into a raw pellet form. While this process is generally effective in providing desired properties to the output products - it requires the separate melting processes to form pellets, which inevitably adds cost to the process and thus, to the end recycled product.

As a result there is a need in the art for a time-efficient as well as a cost-efficient method for forming nonwoven thermoplastic composites prepared from recycled materials, having properties at least comparable to products made with virgin materials.

### Summary of the Invention

The present invention has been made in the view of the above problems, and discloses a method for manufacturing a nonwoven plastic composite using recycled thermoplastic material. The method includes collecting light weight thermoplastic flakes of a predetermined size. The method further includes preparing a thermoplastic matrix by mixing the thermoplastic flakes of generally low weight thermoplastic materials. The method further includes blending the thermoplastic matrix with a core of unraveled natural fiber to form a mixture thereof. Thereafter, the mixture is converted into a web-shaped structure using an air-laying process followed by heating the web shaped structure to obtain a nonwoven plastic composite of a desired thickness.

Generally, the size of thermoplastic flakes of size ranges between 3mm and 15mm.

Possibly, the method further includes forming a plurality of nonwoven recycled plastic composites and connecting them together one over the other to form a multi-layered nonwoven recycled plastic composite.

Further possibly, the plurality of nonwoven plastic composites may be connected together using processes such as but not limited to thermal pressing, vacuum forming, gluing, welding, or the like.

Potentially, the light weight thermoplastic material generally includes light weight thermoplastic (generally having low weight density) such as plastic foils, plastic bags, plastic gloves, foils, or the like.

Further potentially, the natural fiber may be one of but not limited to natural raw fiber such as jute, hemp, cocos, flax, sisal, or the like.

Optionally, the method includes spreading high weight thermoplastic material flakes (generally having higher weight density) over the web of nonwoven recycled plastic before the heating step.

Possibly, the high weight thermoplastic materials may be one of but not limited to ABS, PVC, Poly styrene, nylon, PA, or the like.

Further optionally, the method includes treating the nonwoven plastic composite with a finishing material such as but not limited to antimicrobial coating, wax, paint, varnish, or the like.

Possibly, the thermoforming process may be one of but not limited to the processes such as thermo-bonding, steam heating, microwave heating, heat pressing, pressure molding, vacuum molding, or the like.

In another aspect of present invention, a nonwoven plastic composite is disclosed. The plastic composite is formed of light weight thermoplastics entangled with natural fibers. The plastic composite includes thermoplastic in a range of 50 to 90, or preferably 70 to 90% by weight. The plastic composite further includes natural fiber in a range of 10 to 50, or preferably 10 to 30 % by weight. The plastic composite inherits high mechanical strength and may be used for applications requiring plastic with properties such as high heat resistance, high impact strength, load resistance, or the like.

In yet another aspect of the present invention, a multi-layered nonwoven plastic composite formed using recycled plastic and natural fiber is disclosed.

The details of one or more implementations are set forth in the accompanying drawings and the description below. Other aspects, features and advantages of the subject matter disclosed herein will be apparent from the description, the drawings, and the claims.

### Brief Description of drawings

Other objects, features, and advantages of the invention will be apparent from the following description when read with reference to the accompanying drawings. In the drawings, wherein like reference numerals denote corresponding parts throughout the several views:
Fig. 1 illustrates a schematic view of a nonwoven plastic composite, according to an embodiment of the present invention;
Fig. 2 illustrates a schematic view of a multi-layered nonwoven plastic composite, according to an illustrative embodiment of the present invention;;
Fig. 3 illustrates a schematic view of a multi-layered nonwoven plastic composite, according to another illustrative embodiment of the present invention; and
Fig. 4 illustrates a flowchart depicting a method for manufacturing a nonwoven recycled plastic composite, according to a preferred embodiment of the present invention;
Fig. 5 illustrates a flowchart depicting a method for obtaining low weight thermoplastic flakes from a collection of plastic materials to be recycled, according to a an embodiment of the present invention;

### Detailed Description of the Preferred Embodiments

Reference will now be made in detail to the preferred embodiment of the present invention, examples of which are illustrated in the accompanying drawings. As required, a schematic, exemplary-only embodiment of the present application is disclosed herein; however, it is to be understood that the disclosed embodiment is merely exemplary of the present disclosure, which may be embodied in various and / or alternative forms. Specific structural and functional details disclosed herein are not to be interpreted as limiting, but merely as a basis for the claims and as a representative basis for teaching one skilled in the art to variously employ the present disclosure in virtually any appropriately detailed structure.

Aspects, advantages and/or other features of the exemplary embodiment of the disclosure will become apparent in view of the following detailed description, which discloses various non-limiting embodiments of the invention. In describing exemplary embodiments, specific terminology is employed for the sake of clarity. However, the embodiments are not intended to be limited to this specific terminology. It is to be understood that each specific portion includes all technical equivalents that operate in a similar manner to accomplish a similar purpose.

In the following detailed description, numerous specific details are set forth in order to provide a thorough understanding of the invention. However, it will be understood by those or ordinary skill in the art that the invention may be practiced without these specific details. In other instances, well known methods, procedures and/or components have not been described in detail so as not to obscure the invention.

The present application discloses a method for forming a nonwoven plastic composite from recycled thermoplastic materials using a simple, cost- efficient method. The method utilizes light weight plastic materials such as but not limited to plastic films, foils, plastic bags, etc. to form a plastic composite having appropriate mechanical properties, high heat resistance, high impact strength, load resistance, and very good dimensional stability. The nonwoven plastic composite constructed is useful for forming varieties of panel boards, such as a construction fencing board, advertising boards, plastic road plates, or the like. It is to be understood that while the current disclosure has been explained only for light weight recycled thermoplastic materials such as foils, bags, films etc. the current method may be used for generally all kind of thermoplastic materials. It must also be noted that, as used in this specification and the appended claims, the singular forms "a," "an" and "the" include plural referents unless the context clearly dictates otherwise. Thus, for example, the term "a thermoplastic material" is intended to mean a single thermoplastic material or a combination of various different types of plastic materials.

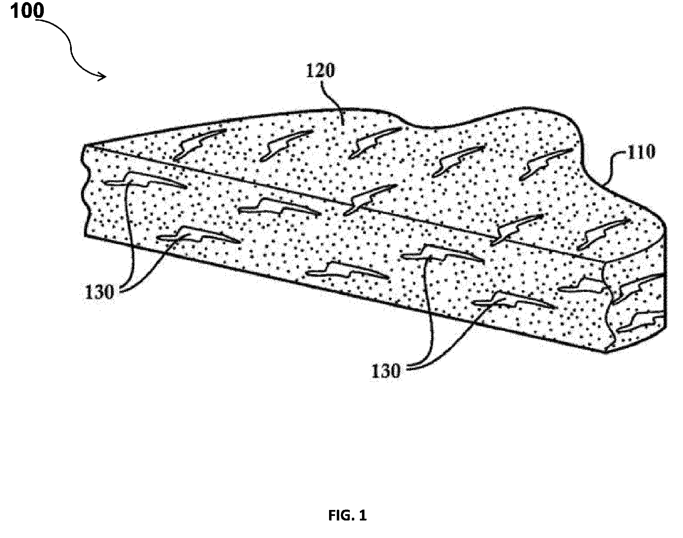

Referring in more detail to the drawings, Fig. 1 illustrates a plastic panel 100 constructed from a nonwoven thermoplastic composite 110 in accordance with one aspect of the present invention. The nonwoven thermoplastic composite 110, at least in part, is constructed, from used, to be recycled, thermoplastic material 120. The thermoplastic material 120 generally constitutes one or more light weight thermoplastic flakes 122 of size ranging between 3mm and 15mm. In some embodiments, the thermoplastic material 120 may further include thermoplastic flakes 124 formed of higher weight density thermoplastics. The thermoplastic composite 110 further includes a core of natural fiber 130, generally entangled (not shown), and bonded within a three dimensional web structure (not shown) with the thermoplastic material 120.

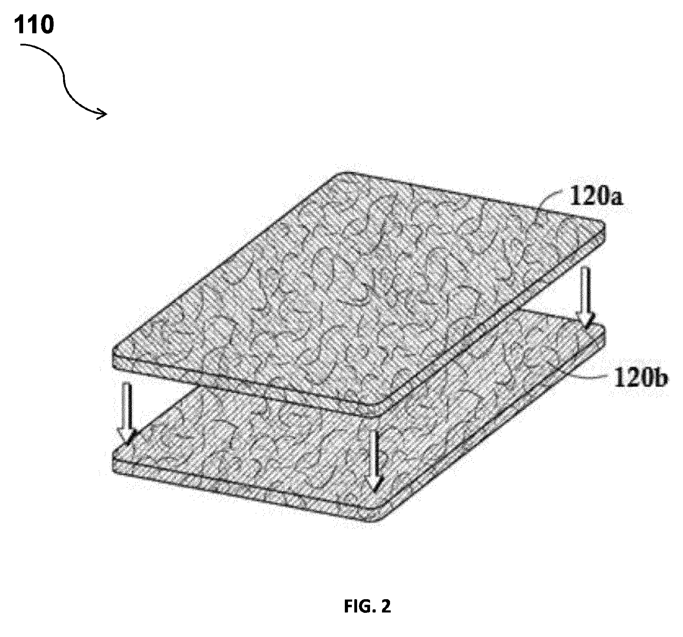

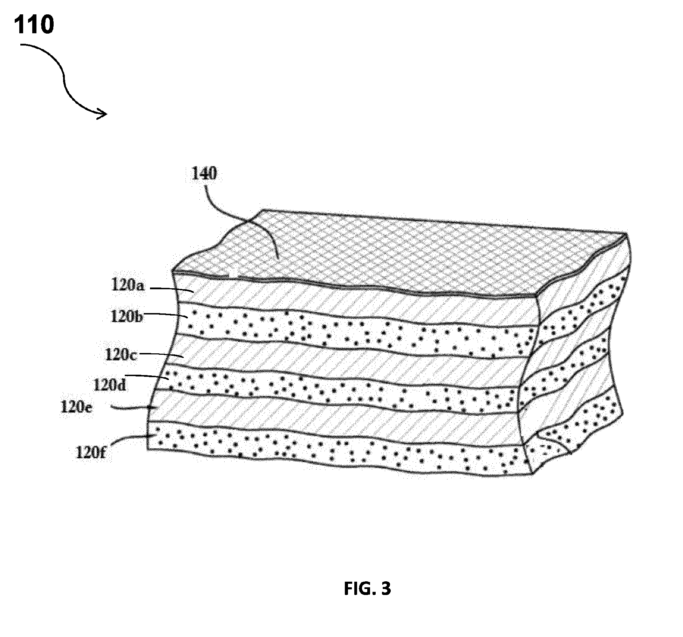

In an embodiment of present invention, as illustrated in Fig. 2, the thermoplastic panel 100 may be formed of a multilayer thermoplastic composite 120. The multilayer composite 120 includes a first layer of thermoplastic composite 120a attached and / or adhered to an adjacent second layer of thermoplastic composite 120b. In some examples, the layers 120a, 120b may be of similar thickness. In some other embodiments, the layer 120a, 120b may be of different thickness. In some examples, the first layer 120a and the second layer 120b are both formed of same thermoplastic materials in same composition. In some other examples, the first layer 120a and the second layer 120b may be formed using different type of thermoplastic materials, thereby providing different properties to each one of them. Accordingly, by inclusion of alternating layers of different materials, the multilayer composite 120 can exhibit the desirable qualities such as high chemical, thermal, and mechanical resistance, high strength, or the like. Though illustrated in Fig. 2 with two layers 120a and 120b, of thermoplastic composite, it should be understood that the multilayer composites 120 may include additional layers as shown in Fig. 3. In one such embodiment, the multilayer composite 120 may include a plurality of thermoplastic composite layers of same material, alternated with thermoplastic composite layers of alternative materials. In some **e**mbodiment, the layers **120**a, **120**b of the multilayer composite **120** can strong**ly** adhere to one another with little or no demarcation between the adjacent layers. In some other embodiment, the layers **120a, 120b** of the multilayer composite **120** are not adhered and just connected using various techniques known in the art.

The multiple layers of the multilayer composite **120** may be connected in any desired orientation and any desired order. Further, the layers **120a, 120b** may be connected at an angle to one another, which can further improve the strength characteristics of the multilayer composites.

The thermoplastic composite **110** may further include one or more layer of finishing materials **140** (as shown in Fig. 3) applied onto a top and / or bottom surface of one or more individual layers of the thermoplastic composite **110.** In an embodiment of the present invention, the finishing material includes one or more antimicrobial coatings of material such as antibacterial agent, antifungal agent, or the like. In another embodiment, the finishing material may include waxing solutions, paint, or the like.

The "Thermoplastic Material" appropriate to be used in this invention, generally constitutes, different types of light weight plastic constituents deriving from the recycled objects such as flexible films and/or sheets obtained beginning from commercial labels, and/or bags, and/or containers, and/or wrappings preferably for food and/or agriculture use, preferably made of at least one material among PE, PET, PVC, PP, PS, all of which are normally unable to be reused and that are ordinarily put into a landfill or incinerated because of cost, melting/bonding, or contamination issues.

Some other non-limiting examples of suitable "Thermoplastic material" includes a product selected from the following group of resins: ABS, acrylic, high density polyethylene (HDPE), low density polyethylene (LDPE), low density polyethylene (LDPE), Polyethylene terephthalate (PET), poly vinyl chloride (PVC or V), polypropylene (PP) and polystyrene (PS) . Current recycled plastics most commonly available are products made of PET and HDPE and include plastic bottles, containers and packaging, plastic lumber, etc., all of which are identified with one of the acceptable recyclable symbols including: "high density white plastic" means containers and packaging made from white or translucent plastics such as white detergent containers, windshield washer containers, etc.

Further examples of thermoplastic material include, the commercial plastic labels applied to containers, boxes, cans, bottles containing foodstuffs, etc.; transparent, semitransparent and opaque bags, containing fresh and/or long-life foodstuffs; bags for agricultural products, such as fertilizers, manure, seeds etc.; transparent, semitransparent and opaque impermeable tarpaulins; bags for garbage, foodstuff, products and goods, etc.; thermoplastic packaging of mono- and multi-product packs, etc. and/or any suitable combination thereof.

The core of natural fiber **130** for use in manufacture of the nonwoven plastic composite **110** is generally a matrix of unraveled fibers obtained by working entangled natural raw fiber using conventionally available tools such as for example, a bast fibre opening machine, or a tearing machine, or the like.

The term "natural fiber" as used herein, refers to any continuous filament which is derived from natural, renewable sources such as plants or animals. The words "fiber" and "fibers" are used interchangeably. Natural fibers may include, but are not limited to, seed fibers such as cotton and kapok; leaf fibers such as sisal and agave; bast fiber or skin fiber such as flax, jute, kenaf, hemp, ramie, rattan, soybean fiber, vine fibers, and banana fibers; fruit fiber such as coconut fiber; stalk fiber such as straws of wheat, rice, barley, bamboo, grass, and tree wood; animal hair fiber such as sheep's wool, goat hair (cashmere, mohair), alpaca hair, horse hair; silk fiber; avian fiber such as feathers; Preferably, the natural fiber used in this invention should possess at least moderate strength and stiffness and good ductility. Fibers with larger diameters are also preferable as these offer greater fiber stiffness. Further, the lengths of the natural fibers **130** may vary from about 50 mm to 400 mm, preferably from about 150 mm to about 350 mm.

In a preferred embodiment of the present invention, the natural fiber **130** includes natural raw fiber such as jute, hemp, cocos, flax, sisal etc. In a more preferred embodiment of the present invention, jute fiber is used as natural fiber **130.** The jute fiber inherits properties such as low density, low abrasive properties, high strength and therefore good dimensional stability.

In some embodiments of the present invention, the natural fiber may also be mixed with synthetic thermoplastic fiber, such as polypropylene ("PP"), polyethylene ("PE"), polylactic acid ("PLA"), or mixture thereof. Such a mixture of natural fibers and thermoplastic synthetic fiber can further enhance the stiffness and hardness of the thermoplastic composite **120.**

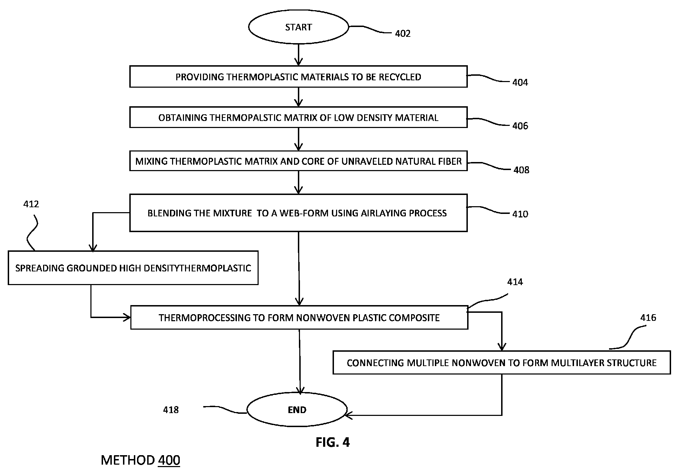

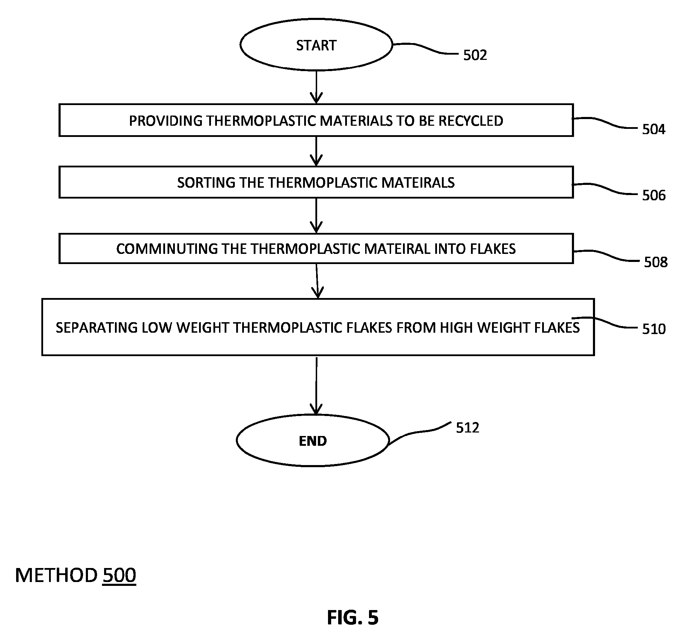

Fig. 4 with reference to Figs.1 through 3 is a flow diagram illustrating a method 400 for manufacturing the thermoplastic composite **110.** As shown in Fig. 4, the method 100 includes a number of steps, however, sequence of the method steps disclosed hereinafter are exemplary for the sake of understanding the invention for persons skilled in the art. The method 400 starts at step 402 and proceeds to step 404 where a collection of light weight thermoplastic flakes having low weight density is obtained and mixed together to form a thermoplastic matrix at step 406. Generally, the collection of light weight thermoplastic flakes may be obtained in a ready to use configuration from various sources (for example third party vendors) providing the recycled thermoplastic flakes. However, in some embodiments of the present invention, the collection of the thermoplastic flakes is obtained from a collection of thermoplastic material to be recycled using a method 500 as disclosed in Fig. 5. The method 500 starts at 502, and proceeds to 504 where a collection of thermoplastic material is received. The collection of thermoplastic material generally includes low weight density thermoplastic material mixed along with high weight density thermoplastic materials. At step 506, the collection of thermoplastic material received is sorted according to various factors such as type of material, color of material, or the like, and is then comminuted to form thermoplastic flakes of size preferably ranging between 3mm and 15mm at step 508. Thereafter at step 510, the thermoplastic flakes having higher weight density are separated from the thermoplastic flakes having lower weight density; preferably by means of centrifugal process, or by separation in water, such that the light weight thermoplastic flakes having a density lower than water is separated from the flakes having a density greater than water.

Looping back to method 400, at step 408, a core of unraveled natural fiber is provided which is mixed with the thermoplastic matrix. Generally, the core of unraveled natural fiber are raw fibers of materials already disclosed, having lengths generally ranging between 50 mm to 400 mm, preferably between about 150 mm to about 350 mm. In an embodiment of the present invention, the ratio by weight of the natural fiber and the thermoplastic flakes is 50:50. In another embodiment said ratio is 30:70. In another embodiment, the ratio by weight of the natural fiber and the thermoplastic flakes is 20:80. In yet another embodiment of the present invention, the ratio by weight of the natural fiber and the thermoplastic flakes is 10:90. The method then proceeds to step 410 where the mixture of the thermoplastic matrix and the core of natural fiber undergoes a webbing process, preferably, an air-lay process to form a homogeneously mixed web structure, or any process wherein a mixture of thermoplastic flakes and natural fibers may be established by means of exposing the materials to one or more air streams. The air-lay process may be performed, for example, on a Rando machine or Laroche machine, or any other machine, as already known in art. Alternatively, the webbing is performed using any known mechanism such as carding process, or the like.

Once the web structure of the blended mixture is formed, the method proceeds to an optional step 412 where the thermoplastic flakes having higher weight density, filtered out at the step 404 are uniformly spread on the web-structure of the blended mixture and is preceded to step 414. Alternatively, the method 400 proceeds directly from step 410 to step 414 where the web structure of the blended mixture is consolidated by heating using known mechanisms such as a thermoforming process. The thermoforming process used, preferably, is a thermo-bonding process in which the web structure obtained from the previous step is heated by passing through heated calendar rollers. Alternatively the consolidation may be performed by other heating mechanisms that may sufficiently raise the temperature within the web-structure so as to enable bond the thermoplastic materials to each other and to the natural fibers. Such mechanism may include, one of but not limited to heat pressing, vacuum molding, steam heating, microwave heating, or the like, already known in the art. The consolidated web-structure may then be converted into a thermoplastic composite **120** of desired thickness.

The method 400 further comprises an optional step 416 where two or more thermoplastic composite as according to steps 402 to step 414 are manufactured. Thereafter, the two or more thermoplastic composites are connected together in a layered structure to form a multi-layered thermoplastic composite as already disclosed with reference to Figs. 2 and 3. The layering may be done by using any of the conventionally known techniques such as one of but not limited to pressing, vacuum forming, gluing, welding, or the like. Further, each layer of the multilayer thermoplastic composite may be formed of similar or different thermoplastic material as according to the desired application and properties of the thermoplastic composite to be manufactured.

In some embodiments of the present invention, the method 400 further includes an optional step of treating one or more surface of the thermoplastic composite **110** with a finishing material **140** (shown in Fig. 3) and / or post treatment processes to impart selected properties to the composite. For example, one or more surface of the thermoplastic composite **110** may be treated with an antimicrobial agent, antifungal agent, or the like. Alternatively and / or additionally, the thermoplastic composite may be treated with finishing materials such as for example, wax, paint, or the like.

### INDUSTRIAL APPLICABILITY

The present disclosure relates to a nonwoven thermoplastic composite **110** sheets, mats, or boards formed of recycled plastic materials generally of light weight, and is usable for various utilities such as traffic management products such as advertising boards, parking plates, drive plates, other structural components formed of thermoplastic materials and requiring desired properties such as Impact strength, swell, heat resistance, heat retardancy, dimensional stability, wear resistance, etc. at least comparable with conventional plastic sheets, mats or boards.

The thermoplastic composite **110** may include about 10% to 50%, or 10% to about 30%, and preferably about 20% by weight of reinforcing natural fibers having an average length of between about 50 mm and about 400 mm, and preferably between about 150 mm and about 350 mm. The thermoplastic composite includes generally and about 50% to 90%, or 70% to about 90% and preferably about 80% by weight of flakes of thermoplastic materials, having an average size ranging between about 3 mm and about 15 mm where the weight percentages are based on the total weight of the thermoplastic composite **110.**

The present disclosure further provides a method, generally referred by the numeral 400, for manufacturing nonwoven thermoplastic composite by recycling light weight thermoplastic materials. The method is generally a simple, cost efficient, timesaving, method for forming a high quality thermoplastic composite using generally unutilized light weight plastic wastes such as plastic foils, plastic bags, gloves, or the like, and/or combinations thereof. Conventionally, using such light weight plastic materials required additional step of melting down and shaping into granulates or pellets, before being applicable to be used for manufacturing of thermoplastic composites. However by using the method 400 in accordance with the present invention, the recycling process may be considerably and significantly shortened.

Referring to Fig. 4 and Fig. 5, methodology in accordance with a preferred embodiment of the claimed subject matter is illustrated. While, for purposes of simplicity of explanation, the methodology is shown and described as a series of acts, it is to be understood and appreciated that the claimed subject matter is not limited by the order of acts, as some acts may occur in different orders and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the claimed subject matter.

Throughout the specifications of the present disclosure, the term "comprising" means including but not necessarily to the exclusion of other elements or steps. In other words, the term comprising indicates an open list. Furthermore, all directional references (such as, but not limited to, upper, lower, inner, outer, upward, downward, inwards, outwards, right, left, rightward, leftward, inside, outside, top, bottom, above, below, vertical, horizontal, clockwise, and counter=clockwise, lineal, axial and/or radial, or any other directional and/or similar references) are only used for identification purposes to aid the reader's understanding of illustrative embodiments of the present disclosure, and may not create any limitations, particularly as to the position, orientation, or use unless specifically set forth in the claims. Moreover, all directional references are approximate and should not be interpreted as exact, but rather as describing a general indicator as to an approximate attitude.

Similarly, joinder references (such as, but not limited to, attached, coupled, connected, accommodated, and the like and their derivatives) are to be construed broadly and may include intermediate members between a connection of segments and relative movement between segments. As such, joinder references may not necessarily infer that two segments are directly connected and in fixed relation to each other.

In some instances, components are described with reference to "ends" having a particular characteristic and/or being connected with an-other part. However, those skilled in the art will recognize that the present disclosure is not limited to components which terminate immediately be-yond their points of connection with other parts. Thus, the term "end" should be interpreted broadly, in a manner that includes areas adjacent, rearward, forward of, or otherwise near the terminus of a particular segment, link, component, part, member or the like. Additionally, all numerical terms, such as, but not limited to, "second", "second", "third", "fourth", or any other ordinary and/or numerical terms, should also be taken only as identifiers, to assist the reader's understanding of the various embodiments, variations and/or modifications of the present disclosure, and may not create any limitations, particularly as to the order, or preference, of any embodiment, variation and/or modification relative to, or over, another embodiment, variation and/or modification.

As will be readily apparent to those skilled in the art, the present invention may easily be produced in other specific forms without departing from its essential characteristics. The present embodiments is, therefore, to be considered as merely illustrative and not restrictive, the scope of the invention being indicated by the claims rather than the foregoing description, and all changes which come within therefore intended to be embraced therein. Many variations, modifications, additions, and improvements are possible. More generally, embodiments in accordance with the present disclosure have been described in the context of preferred embodiments. Functionalities may be separated or combined in procedures differently in various embodiments of the disclosure or described with different terminology. These and other variations, modifications, additions, and improvements may fall within the scope of the disclosure as defined in the appended claims.

## Claims

1. A method of manufacturing a nonwoven recycled plastic composite, the method comprising the steps of:
i) Providing flakes of lightweight thermoplastic materials to be recycled;
ii) Forming a thermoplastic matrix by mixing the light weight thermoplastic flakes.
iii) Combining the thermoplastic matrix with a core of unravelled natural fiber to form a mixture;
iv) Forming a web-structure of a predetermined thickness from the mixture using an air-laying process; and
v) Consolidating the web-structure by heating the web using a thermoforming process.

2. The method of claim 1, wherein the light weight thermoplastic flakes are obtained by a method comprising the steps of:
i) Providing one or more thermoplastic materials to be recycled;
ii) Comminuting the one or more thermoplastic materials into small sized flakes;
iii) Sorting the thermoplastic material flakes into light weight thermoplastic materials and high weight thermoplastic materials.

3. The method of claim 1, further comprising the steps of
i) forming a plurality of nonwoven recycled plastic composites; and
ii) Connecting the plurality of nonwoven plastic composites in a layered structure to form a multi-layered nonwoven recycled plastic composite.

4. The method of claim 3, wherein the plurality of plastic composites may be connected in a layered structure using a process selected but not limited to one of pressing, vacuum forming, gluing, or welding.

5. A method of claim 1 and 2, optionally comprising the step of spreading high weight thermoplastic flakes over the web of nonwoven recycled plastic.

6. The method of claim 5, wherein the step of spreading thermoplastic flakes is performed prior to the step of heating by thermoforming.

7. The method of claim 1, further comprising the step of treating the nonwoven plastic composite with a finishing material.

8. The method of claim 7, wherein the finishing treatment includes one or more of an antimicrobial coating, waxing, painting, or the like.

9. The method of claim 1 or 2, wherein the thermoplastic material is individually selected from selected from the group of resins including but not limited to ABS, acrylic, high density polyethylene (HDPE), low density polyethylene (LDPE), low density polyethylene (LDPE), Polyethylene terephthalate (PET), poly vinyl chloride (PVC or V), polypropylene (PP) and polystyrene (PS), plastic bottles, containers and packaging, plastic lumber, plastic bags, plastic foils, films, and /or combination thereof.

10. A method of claim 1 or 2, wherein the light weight thermoplastic materials include one or more of the group comprising plastic foils, plastic bags, low density polyethylene (LDPE), low density polyethylene (LDPE), plastic wrappers, or the like, and/or combinations thereof.

11. The method of claim 1 or 2, wherein the heavy weight thermoplastic material includes one or more from the group comprising ABS, PVC, Poly styrene, nylon, PA, or the like, and/or combinations thereof.

12. The method of claim 1, wherein the natural fiber is individually selected from one or more of seed fibers such as cotton and kapok; leaf fibers such as sisal and agave; bast fiber or skin fiber such as flax, jute, kenaf, hemp, ramie, rattan, soybean fiber, vine fibers, and banana fibers; fruit fiber such as coconut fiber; stalk fiber such as straws of wheat, rice, barley, bamboo, grass, and tree wood; animal hair fiber such as sheep's wool, goat hair, alpaca hair, horse hair; silk fiber; avian fiber such as feathers.

13. The method of claim 1, wherein heating process comprises one of steam heating, steam injection heating, microwave heating, vacuum heating, or the like.

14. The method of claim 1, wherein the size of flakes ranges between 3mm and 15 mm.

15. The method of claim 1, wherein the core of natural fiber and thermoplastic matrix are mixed in a ratio of less than 50:50 by weight, or less than 30:70 by weight, and preferably in a ratio of 20:80 by weight.

16. The method of claim 1, wherein the length of natural fiber ranges between 50 mm to about 400 mm, and preferably between 100 mm and 300mm.

17. A nonwoven recycled plastic composite manufactured using method of any of the preceding claims.

18. The nonwoven plastic composite of claim 17, wherein the nonwoven composite comprises between about 10% to 50%, or about 10% to about 30%, and preferably about 20%, by weight of the unravelled natural fibers.

19. The nonwoven plastic composite of claim 17, wherein the nonwoven composite comprises between about 50% to 90%, about 70% to about 90%, and preferably about 80% by weight of the thermoplastic flakes.

20. The nonwoven plastic composite of claim 17, wherein the plastic composite comprises a finishing layer of material such as but not limited to wax , paint, coatings, or the like.
